# EUROPÄISCHE PATENTSCHRIFT

(11) **EP 2 168 694 B1**
(45) Veröffentlichungstag und Bekanntmachung des Hinweises auf die Patenterteilung: **14.11.2012**
(21) Anmeldenummer: 09012088.2
(22) Anmeldetag: 23.09.2009
(51) Int. Cl.: B08B 7/00, C23G 5/00, F26B 5/16, C22B 1/00, C22B 7/00, C23C 22/68, C23C 26/00, B03C 1/30, B23Q 11/00

(54) **Verfahren zum Entfeuchten von metallischen Spänen**
Method for removing moisture from metallic cuttings
Procédé de déshumidification de copeaux métalliques

(30) Priorität: 24.09.2008 DE 102008048770
(43) Veröffentlichungstag der Anmeldung: 31.03.2010
(73) Patentinhaber: Magnesium Solutions Europe, 99706 Sondershausen (DE)
(72) Erfinder: Brück, Volker, 06526 Sangerhausen (DE)
(74) Vertreter: DR. STARK & PARTNER

(56) Entgegenhaltungen:
- DE-A1- 3 537 156
- DE-A1- 19 627 550
- NL-A- 8 101 505

## Beschreibung

Die Erfindung betrifft ein Verfahren zum Entfeuchten von metallischen Spänen, wobei die Späne mit Flüssigkeiten, wie z. B. wässrigen und/oder ölhaltigen Zusätzen oder Emulsionen, benetzt sind.

Aus der Praxis sind derartige Verfahren bekannt, wobei die Entfeuchtung durch Lufttrocknung oder Hitzebeaufschlagung erfolgen kann. Nachteilig hierbei ist, dass bei nicht vollständig verdunstenden Flüssigkeiten unerwünschte Reststoffe an den Spänen verbleiben können.

So beschreibt die DE 35 37 156 A1 ein Verfahren zur Aufbereitung verölter oder leicht ölhaltiger metallspäne, wobei eine Vermischung mit einem Ölbinder erfolgt. Das entstehende Gemisch kann, falls erforderlich oder gewünscht, mittels Magnetabscheider getrennt werden.

Aus der DE 196 27 550 A1 ist ein Verfahren zum Aufbereiten von metallisches Aluminium enthaltenen Abfällen bekannt, wobei Aluminiumepäne mit Flugasche versetzt und durchmischt werden, wobei anschließend durch Siebung eine Trennung erfolgt. Das Siebkorn wird dann im Stahlerzeugungsprozess verwendet und das Überkorn in eine Aluminiumschmelze eingebracht.

In der NL 8101505 ist ein Verfahren zur Umsetzung einer feuchtigkeitshaltigen Zusammensetzung in eine verarbeitbare Zusammensetzung beschrieben.

Die Erfindung betrifft weiterhin auch ein Verfahren zur physikalischen Trennung von metallischen Spänen, wobei die Späne mit Flüssigkeiten, wie z. B. wässrigen und/oder ölhaltigen Zusätzen oder Emulsionen, benetzt sind.

Dabei erfolgt die Trennung in der Regel, um Späne aus unterschiedlichen Materialien, beispielsweise für eine ökonomische und ökologische Wiederverwertung voreinander zu trennen. Da bei der spanenden mechanischen Bearbeitung von Metallteilen oder Metall-Verbundteilen Emulsionen und/oder Kühlschmierstoffe eingesetzt werden, um z.B. die Oberflächengüte, Schnittparameter oder Werkzeugstandzeiten zu verbessern. Die Emulsionen bestehen dabei üblicherweise aus Wasser, Öl, Inhibitoren und weiteren Additiven.

Nachteilig hierbei ist, dass bei allgemein bekannten mechanischen Trennverfahren zur Separation von Materialien unterschiedlicher Dichte und/oder Qualität der Dichteunterschied und/oder unterschiedliche ferromagnetische Eigenschaften genutzt werden, um nun leichtere Stoffe von schwereren Stoffen und magnetische Stoffe von nicht oder weniger magnetischen Stoffen zu trennen. Jedoch sind die zu trennenden Späne durch die Anhaftungen von Rückständen der Emulsionen und/oder Kühlschmierstoffen miteinander verklebt bzw. haften aneinander. Somit kann eine Trennung durch Siebe nicht erfolgen, da diese sich schnell zusetzen, und durch das Verkleben können auch andere Trennverfahren, z.B. Magnetscheider oder Windsichter, nicht verwendet werden, da eine Separation durch das Verkleben nicht oder aber nur in begrenztem Umfang möglich ist.

Aufgabe der Erfindung ist es, die vorgenannten Nachteile zu vermeiden und ein Verfahren anzugeben, mit dem eine verbesserte Entfeuchtung erfolgen kann. Auch soll ein Verfahren angegeben werden, mit dem eine Trennung der Späne in höherem Umfang, insbesondere eine vollständige Trennung, erfolgen kann.

Diese Aufgabe wird gelöst durch die kennzeichnenden Merkmale von Patentanspruch 1. Hierdurch wird von den Spänen die an ihnen anhaftende(n) Flüssigkeit(en) entfernt, da das Bindemittel diese bindet.

Insoweit soll nach dem Durchmischen der Späne mit dem Eindemittel und nach dem Überziehen der Späne mit einer Schicht des Bindemittels anschließend eine physikalische Trennung der Späne erfolgen. Hierdurch werden die Rückstände der Flüssigkeiten durch das Bindemittel gebunden, so dass Anhaftungen zwischen den einzelnen Spänen gelöst und Verklebungen von Spänen miteinander reduziert werden. Eine Trennung kann damit besser erfolgen.

Dabei wird vor der Trennung der Späne das Bindemittel mit den anhaftenden oder aufgenommenen Flüssigkeiten zu einem überwiegenden Anteil, insbesondere im Wesentlichen oder sogar vollständig, von den Spänen, getrennt, so dass die getrennten Späne nicht oder nur noch in einem geringeren Umfang "verunreinigt" sind und zudem das Bindemittel und die damit gebundenen Flüssigkeiten einer separaten Entsorgung/Weiterverwertung zugeführt werden können. Die Trennung des beispielsweise durch mechanische Einwirkungen von den Spänen bereits gelösten Bindemittels von den Spänen kann dabei beispielsweise durch Sieben oder mittels eines Windsichters bzw. Magnetscheiders erfolgen.

Zudem ist die Korngröße des Bindemittels kleiner, insbesondere um das 2 bis 10-fache kleiner, als die Spangröße der Späne, so dass eine gute "Abdeckung" der Späne auch in gekrümmten oder gewundenen Bereichen und insbesondere auch im Inneren von spiralförmigen Spänen erzielt werden kann. Damit kann die Korngröße des Bindemittels bis zu 1 mm betragen, es sind aber auch Korngrößen entsprechend einer mehligen Konsistenz vorteilhafterweise möglich.

Dabei ist die Korngröße des Bindemittels so klein ausgebildet, dass eine Benetzung der Späne auch an gekrümmten Bereichen oder im Inneren von beispielsweise spiralförmig umschlossenen Bereichen erfolgt.

Dabei können die Späne eine Größe von bis zu 10 mm aufweise und insbesondere spiralig mit 2 bis 3 Windungen ausgebildet sein.

Das Durchmischen der Späne mit dem Bindemittel kann dabei in üblicher Weise, beispielsweise mittels einer Mischschnecke oder unter Verwendung eines Mixers, erfolgen.

Erfindungsgemäß können die Späne zumindest zwei verschiedene Spansorten mit unterschiedlichen metallischen Zusammensetzungen umfassen, und die Trennung der Späne kann entsprechend der jeweiligen Zusammensetzung der Spansorten erfolgen, so dass eine bessere und zielgerichtetere Weiter- und Wiederverwertung möglich ist. Die Trennung der verschiedenen Spansorten voneinander kann dabei beispielsweise durch Sieben oder mittels eines Windsichters bzw. Magnetscheiders erfolgen. Dabei können Spangröße und/oder -form der verschiedenen Spansorten voreinander abweichen oder aber zumindest teilweise übereinstimmen.

Erfindungsgemäß kann der Anteil des Bindemittels beim Durchmischen in Abhängigkeit von der Flüssigkeitsaufnahmefähigkeit so gewählt sein, dass die Menge der maximal aufnehmbaren Flüssigkeit des beim Durchmischen zugegebenen Bindmittels größer ist als der Flüssigkeitsanteil der Späne, insbesondere das 1,5- bis 3-fache des Flüssigkeitsanteils der Späne beträgt, so dass sicher eine vollständige Bindung der gesamten an den Spänen anhaftenden Flüssigkeitsmenge(n) erzielt werden kann.

Dabei kann ein Bindemittel mit einer guten Fettaufnahmefähigkeit verwendet werden, so dass durch dessen lipophile Eigenschaft Flüssigkeiten mit einem hohen Fettanteil gebunden werden können.

Auch kann ein Bindemittel mit einer guten Wasseraufnahmefähigkeit verwendet werden, so dass durch dessen hygroskopische bzw. hydrophile Eigenschaft Flüssigkeiten mit einem hohen Wasseranteil gebunden werden können.

Bei einer bevorzugten Ausprägung des erfindungsgemäßen Verfahrens kann ein Bindemittel mit einer guten Wasseraufnahmefähigkeit und einer guten Fettaufnahmefähigkeit verwendet werden, so dass durch dessen ambiphile bzw. amphiphile Eigenschaft Flüssigkeiten mit einem hohen Wasseranteil und Flüssigkeiten mit einem hohen Fettanteil gebunden werden können.

Erfindungsgemäß kann als Bindemittel Gips und/oder Kalk oder ein Anhydrid verwendet werden. Geeignete Bindemittel sind beispielsweise auch Calciumcarbonat und Calciumoxid.

Durch das Binden der aufzunehmenden Flüssigkeiten verklumpt das Bindemittel, oder aber, sofern es sich um ein poröses Material handelt, wird die aufzunehmende Flüssigkeit in den Hohlräumen des Bindemittels gebunden.

## Patentansprüche

1. Verfahren zum Entfeuchten von metallischen Spänen, wobei die Späne mit Flüssigkeiten, wie z. B. wässrigen und/oder ölhaltigen Zusätzen oder Emulsionen, benetzt sind, **dadurch gekennzeichnet, dass** die Späne derart mit einem insbesondere mineralischen Bindemittel durchmischt werden, dass jeder einzelne Span im Wesentlichen mit einer Schicht des Bindemittels überzogen wird, wobei nach dem Durchmischen der Späne mit dem Bindemittel und nach dem Überziehen der Späne mit einer Schicht des Bindemittels anschließend eine physikalische Trennung der Späne erfolgt und wobei vor der Trennung der Späne das Bindemittel mit den anhaftenden oder aufgenommenen Flüssigkeiten zu einem überwiegenden Anteil, insbesondere im Wesentlichen oder sogar vollständig, von den Spänen, getrennt wird, wobei weiterhin die Korngröße des Bindemittels kleiner ist, insbesondere um das 2 bis 10-fache kleiner ist, als die Spangröße der Späne und wobei die Korngröße des Bindemittels so klein ausgebildet ist, dass eine Benetzung der Späne auch an gekrümmten Bereichen oder im Inneren von beispielsweise spiralförmig umschlossenen Bereichen erfolgt.

2. Verfahren nach dem vorhergehenden Anspruch , **dadurch gekennzeichnet, dass** die Späne zumindest zwei verschiedene Spansorten mit unterschiedlichen metallischen Zusammensetzungen umfassen und insbesondere die Trennung der Späne entsprechend der jeweiligen Zusammensetzung der Spansorten erfolgt.

3. Verfahren nach einem der vorhergehenden Ansprüche, **dadurch gekennzeichnet, dass** der Anteil des Bindemittels beim Durchmischen in Abhängigkeit von der Flüssigkeitsaufnahmefähigkeit so gewählt ist, dass die Menge der maximal aufnehmbaren Flüssigkeit des beim Durchmischen zugegebenen Bindmittels größer ist als der Flüssigkeitsanteil der Späne, insbesondere das 1,5- bis 3-fache des Flüssigkeitsanteils der Späne beträgt.

4. Verfahren nach einem der vorhergehenden Ansprüche, **dadurch gekennzeichnet, dass** ein Bindemittel mit einer guten Fettaufnahmefähigkeit verwendet wird.

5. Verfahren nach einem der vorhergehenden Ansprüche, **dadurch gekennzeichnet, dass** ein Bindemittel mit einer guten Wasseraufnahmefähigkeit verwendet wird.

6. Verfahren nach einem der vorhergehenden Ansprüche, **dadurch gekennzeichnet, dass** als Bindemittel Gips und/oder Kalk oder ein Anhydrid verwendet wird.

## Claims

1. A method for dehumidifying metallic cuttings, wherein the cuttings are wetted with liquids, such as watery and/or oily additives or emulsions, **characterized in that** the cuttings are mixed in such a way with a particular mineral binder that each individual cutting is coated substantially with a layer of the binder; wherein after mixing of the cuttings with the binder and after covering the cuttings with a layer of the binder follows a physical separation of the cuttings and wherein prior to separation of the cuttings, the binder with the adhering or captured liquids is separated substantially or even completely from the cuttings, wherein further the grain size of the binder Is In particular 2 to 10 times smaller than size of the cuttings and wherein the grain size of the binder is so small that wetting of the cuttings takes place even In curved regions or in the Interior of spirally enclosed regions, for example.

2. A method according to claim 1 **characterized in that** the cuttings comprise at least two different types of cuttings with different metallic compositions and in particular the separation of the cuttings corresponding to the actual composition of the type of cuttings.

3. A method according to any one of the preceding claims, **characterized in that** the proportion of binder during mixing is chosen as a function of liquid take up so that the amount of mixed-in binder is greater than the liquid portion of the cuttings, in particular 1.5 - 3 times the proportion of liquid of the cuttings.

4. A method according to any one of the preceding claims, **characterized in that** a binder is used with a good grease affinity.

5. A method according to any one of the preceding claims, **characterized in that** a binder is used with good water affinity.

6. A method according to any of the preceding claims, **characterized in that** the binder used is gypsum and/or lime, or an anhydride.

## Revendications

1. Procédé de déshumidification de copeaux métalliques, sachant que les copeaux sont arrosés de liquides, par exemple d'émulsions ou d'additifs aqueux et/ou contenant de l'huile, **caractérisé en ce que** les copeaux sont intimement mélangés à un liant notamment minéral de telle sorte que chaque copeau individuel est pour l'essentiel revêtu d'une couche de liant, sachant qu'une séparation physique des copeaux a lieu après le mélangeage intime des copeaux avec le liant et après le revêtement des copeaux d'une couche de liant, et sachant qu'avant la séparation des copeaux, le liant est, avec les liquides adhérents ou absorbés, séparés des copeaux pour une part prépondérante, notamment pour l'essentiel ou même totalement, sachant en outre que la taille de grains du liant est inférieure, notamment 2 à 10 fois inférieure, à la taille des copeaux, et sachant que la taille de grains du liant est prévue tellement petite qu'un mouillage des copeaux a lieu même sur des zones incurvées ou à l'intérieur de zones entourées par exemple en spirale.

2. Procédé selon la revendication précédente, **caractérisé en ce que** les copeaux comprennent au moins deux types différents de copeaux avec des compositions métalliques différentes, et la séparation des copeaux notamment s'effectue en fonction de la composition respective des types de copeaux.

3. Procédé selon l'une des revendications précédentes, **caractérisé en ce que** la part de liant lors du mélangeage intime est choisie, en fonction de la capacité d'absorption de liquide, de telle sorte que la quantité maximale de liquide absorbable du liant ajouté lors du mélangeage intime est supérieure à la part de liquide des copeaux, notamment est égale à 1,5 à 3 fois la part de liquide des copeaux.

4. Procédé selon l'une des revendications précédentes, **caractérisé en ce qu'**on utilise un liant ayant une bonne capacité d'absorption de graisse.

5. Procédé selon l'une des revendications précédentes, **caractérisé en ce qu'**on utilise un liant ayant une bonne capacité d'absorption d'eau.

6. Procédé selon l'une des revendications précédentes, **caractérisé en ce qu'**on utilise comme liant du gypse et/ou de la chaux ou un anhydride.
